# DEMANDE DE BREVET EUROPEEN

(11) **EP 4 303 510 A1**
(43) Date de publication de la demande: **10.01.2024**
(21) Numéro de dépôt: 23178157.6
(22) Date de dépôt: 08.06.2023
(51) Int. Cl.: F25J 1/00

(54) **INSTALLATION ET PROCÉDÉ DE LIQUÉFACTION D'HYDROGÈNE**

(30) Priorité: 29.06.2022 FR 2206509
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: PLAYS, Thibault, 78350 JOUY-EN-JOSAS (FR)
(74) Mandataire: Air Liquide

(57) **Abrégé**

L'invention concerne une installation de liquéfaction d'hydrogène comprenant un circuit (3) d'hydrogène à refroidir, un ensemble d'échangeur(s) (4, 5, 6, 7, 8) de chaleur en échange thermique avec le circuit (3) d'hydrogène à refroidir, un système (9) de refroidissement comprenant un réfrigérateur à cycle de réfrigération d'un premier gaz de cycle comprenant de l'hélium et/ou de l'hydrogène, le circuit (3) d'hydrogène à refroidir comprenant au moins une section (12) de catalyse pour assurer une conversion de l'hydrogène ortho en hydrogène para, le circuit (3) d'hydrogène à refroidir comprenant en outre une première portion (13) de dérivation d'au moins une section (12) de catalyse, l'extrémité aval (23) du circuit (3) d'hydrogène à refroidir comprenant deux branches parallèles (13, 130) non combinées et alimentées respectivement avec l'hydrogène passé dans la première portion (13) de dérivation et avec de l'hydrogène passé dans la section (12) de catalyse pour fournir deux flux distincts d'hydrogène ayant des proportions relatives d'hydrogène ortho et para différentes.

## Description

L'invention concerne une installation et un procédé de liquéfaction d'hydrogène.

L'invention concerne plus particulièrement une installation de liquéfaction d'hydrogène comprenant un circuit d'hydrogène à refroidir ayant une extrémité amont destinée à être reliée à une source de d'hydrogène gazeux et une extrémité aval destinée à être reliée à au moins un organe de collecte de l'hydrogène liquéfié, l'installation comprenant un ensemble d'échangeur(s) de chaleur en échange thermique avec le circuit d'hydrogène à refroidir, le dispositif comprenant un système de refroidissement en échange thermique avec au moins une partie de l'ensemble d'échangeur(s) de chaleur et configuré pour abaisser la température de l'hydrogène à une température déterminée, par exemple comprise 15 et 25K, le système de refroidissement comprend un réfrigérateur à cycle de réfrigération d'un premier gaz de cycle comprenant de l'hélium et/ou de l'hydrogène, le circuit d'hydrogène à refroidir comprenant au moins une section de catalyse configurée pour assurer une conversion de l'hydrogène ortho en hydrogène para, le circuit d'hydrogène à refroidir comprenant en outre une première portion de dérivation d'au moins une section de catalyse configurée pour permettre de contrôler les proportions relatives d'hydrogène ortho et para obtenus à l'extrémité aval.

L'hydrogène possède deux isomères qui diffèrent par la combinaison des spins de chaque atome d'hydrogène composant la molécule. La forme ortho-hydrogène (ortho) possède des spins parallèles alors que la forme para-hydrogène (para) possède des spins antiparallèles.

La proportion à l'équilibre de ces deux isomères dépend de la température.

Ainsi, à température ambiante l'hydrogène est composé de 75% hydrogène ortho et de 25% d'hydrogène para alors qu'à la température de l'hydrogène liquide (+/- 20 K), l'équilibre est atteint proche de 100% en hydrogène para. La conversion de la forme ortho vers la forme para est exothermique. L'énergie dégagée par cette réaction de conversion (700 J/g à 20K) est supérieure à l'énergie de vaporisation (450 J/g)). En revanche, la cinétique de cette réaction est plutôt lente en l'absence de catalyseur. Ainsi, s'il on n'utilise pas de catalyseur lors de sa liquéfaction, l'hydrogène en sortie du liquéfacteur sera très loin de son équilibre. La conversion s'effectuera donc dans le stockage, et durant le transport. Afin d'éviter cet apport de chaleur dans les réservoirs d'hydrogène liquide générant une vaporisation partielle d'hydrogène liquide, la conversion de l'isomère ortho en isomère para est catalysée dans le procédé de liquéfaction afin d'approcher la concentration à l'équilibre.

Cette conversion ortho en para est très coûteuse en énergie car il est nécessaire d'absorber le dégagement de chaleur de la réaction à des faibles températures (en dessous de l'azote liquide 77 K jusqu'à 20 K). Or produire du froid à ces températures nécessite une consommation importante d'énergie.

Une réglementation du transport de l'hydrogène peut imposer une teneur déterminée (par exemple 95%) en hydrogène para. Afin d'assurer cette valeur, des marges de dimensionnement sont généralement prises résultant une teneur en hydrogène par en sortie proche de 100%. Plusieurs schémas de procédés existent pour la liquéfaction, notamment suivant l'utilisation de diverses boucles de réfrigération (Hydrogène, Hélium, Mélange de Réfrigérants...). Tous ces procédés utilisent du catalyseur jusqu'au bout froid du procédé. Soit à travers des pots catalytiques entre chaque échangeur du procédé, soit en installant le catalyseur dans les échangeurs.

En fonction du temps de vie de l'hydrogène liquide (réservoir du liquéfacteur + transport + réservoir client) il y a une concentration en hydrogène para optimale en sortie de liquéfacteur. En effet, la chaleur dégagée par la conversion naturelle de l'hydrogène durant son temps de séjour peut être calculée et ainsi obtenir les pertes énergétiques ou de matière liés à la conversion ortho/para.

Le document WO02065037A1 décrit une installation qui permet de faire varier le taux ortho/para en sortie du liquéfacteur. Cette installation fourni un flux d'hydrogène obtenu par un mélange de deux flux ayant subi des catalyses différentes. Un flux d'hydrogène bypasse une section de catalyse et est remélangé avec le flux principal.

Cette structure est inadaptée à la fourniture d'un flux à un tuyau de transport. En particulier, la solution décrite ne permet pas d'alimenter des organes récepteurs avec des flux aux conditions différentes (température, pression ou taux d'hydrogène para).

Un but de la présente invention est de pallier tout ou partie des inconvénients de l'art antérieur relevés ci-dessus.

A cette fin, l'installation selon l'invention, par ailleurs conforme à la définition générique qu'en donne le préambule ci-dessus, est essentiellement caractérisée en ce que l'extrémité aval du circuit d'hydrogène à refroidir comprenant deux branches parallèles non combinées et alimentées respectivement avec l'hydrogène passé dans la première portion de dérivation et avec de l'hydrogène passé dans la section de catalyse pour fournir deux flux distincts d'hydrogène ayant des proportions relatives d'hydrogène ortho et para différentes à un ou des organes de collecte.

Par ailleurs, des modes de réalisation de l'invention peuvent comporter l'une ou plusieurs des caractéristiques suivantes :
- la branche de l'extrémité aval du circuit d'hydrogène à refroidir alimentée avec l'hydrogène passé dans la section de catalyse comprend un organe de détente du flux d'hydrogène, par exemple une vanne de détente, et un stockage tampon de l'hydrogène détendu,
- l'organe de détente et/ou le stockage tampon sont configurés pour stocker l'hydrogène liquéfié dans le stockage tampon à une pression déterminée, par exemple comprise entre 1 et 2bar,
- le stockage tampon comprend une conduite de soutirage munie d'une pompe,
- la branche de l'extrémité aval du circuit d'hydrogène à refroidir alimentée avec l'hydrogène passé dans la portion de dérivation est configurée pour fournir un flux d'hydrogène à une pression supérieure à la pression de l'hydrogène dans l'autre branche, et par exemple une pression comprise entre 10 à 25 bar,
- les extrémités aval des deux branches parallèles sont raccordées à un même raccord fluidique ou collecteur,
- l'installation comprend plusieurs sections de catalyse disposées en série d'amont en aval sur le circuit d'hydrogène à refroidir et configurées pour assurer une conversion ortho-para de l'hydrogène, la première portion de dérivation est configurée pour bypasser la dernière section de catalyse aval,
- la branche du circuit de fluide à refroidir passant par la section de catalyse est configurée pour refroidir l'hydrogène avec un échangeur de chaleur de refroidissement avant passer dans la section de catalyse puis pour échanger à nouveau avec ce même échangeur après passage dans la section de catalyse,
- le circuit d'hydrogène à refroidir comprend une seconde branche de dérivation configurée pour bypasser la section de catalyse, la seconde branche de dérivation étant raccordée en aval avec la branche alimentée avec l'hydrogène passé dans la section de catalyse.

L'invention concerne également un procédé de liquéfaction d'hydrogène utilisant une installation de liquéfaction comprenant un circuit d'hydrogène à refroidir ayant une extrémité amont destinée à être reliée à une source de fluide gazeux et une extrémité aval destinée à être reliée à un organe de collecte de l'hydrogène liquéfié, l'installation comprenant un ensemble d'échangeur(s) de chaleur en échange thermique avec le circuit d'hydrogène à refroidir, le dispositif comprenant un système de refroidissement en échange thermique avec au moins une partie de l'ensemble d'échangeur(s) de chaleur et configuré pour abaisser la température de l'hydrogène à une température déterminée, par exemple comprise 15 et 25K, le système de refroidissement comprend un réfrigérateur à cycle de réfrigération d'un premier gaz de cycle comprenant de l'hélium et/ou de l'hydrogène, le circuit d'hydrogène à refroidir comprenant au moins une section de catalyse configurée pour assurer une conversion ortho-para de l'hydrogène, le circuit d'hydrogène à refroidir comprenant en outre une première portion de dérivation d'au moins une section de catalyse configurée pour permettre de contrôler les proportions relatives d'hydrogène ortho et para obtenus à l'extrémité aval, l'extrémité aval du circuit de fluide à refroidir comprenant deux branches parallèles alimentées respectivement avec l'hydrogène passé dans la première portion de dérivation et l'hydrogène passé dans la section de catalyse, pour fournir deux flux distincts d'hydrogène ayant des proportions relatives d'hydrogène ortho et para différentes à un ou des organes de collecte , le procédé comprenant une étape de production et de stockage d'hydrogène liquéfié avec une proportion d'hydrogène para relativement plus importante par exemple supérieure à 95% et une étape de production et de fourniture d'hydrogène liquéfié avec un proportion d'hydrogène para relativement plus faible par exemple comprise entre 50 et 90%.

Selon d'autres particularités possibles :
- lors de l'étape de production et de fourniture d'hydrogène liquéfié avec un proportion d'hydrogène para relativement plus faible, l'hydrogène liquéfié est fourni à un tuyau de transport et de distribution d'hydrogène liquéfié,
- lors de l'étape de production et de fourniture d'hydrogène liquéfié avec un proportion d'hydrogène para relativement plus faible, une fraction d'hydrogène liquéfié avec un proportion d'hydrogène para relativement plus importante est mélangée à l'hydrogène liquéfié ayant une proportion d'hydrogène para relativement plus faible.

L'invention peut concerner également tout dispositif ou procédé alternatif comprenant toute combinaison des caractéristiques ci-dessus ou ci-dessous dans le cadre des revendications. D'autres particularités et avantages apparaîtront à la lecture de la description ci-après, faite en référence aux figures dans lesquelles :

### Brève description des figures

L'invention sera mieux comprise à la lecture de la description qui va suivre donnée uniquement à titre d'exemple et faite en se référant aux dessins annexés dans lesquels :
[Fig. 1] est une vue schématique et partielle illustrant un exemple de structure et de fonctionnement d'une installation selon un mode de réalisation de l'invention,
[Fig. 2] est une vue schématique et partielle illustrant un détail d'une variante de réalisation d'une installation selon l'invention.
[Fig. 3] est une vue schématique et partielle illustrant un exemple de structure et de fonctionnement d'une installation selon un autre mode de réalisation de l'invention,

### Description détaillée

Sur toutes les figures, les mêmes références se rapportent aux mêmes éléments.

Dans cette description détaillée, les réalisations suivantes sont des exemples. Bien que la description se réfère à un ou plusieurs modes de réalisation, cela ne signifie pas que les caractéristiques s'appliquent seulement à un seul mode de réalisation. De simples caractéristiques de différents modes de réalisation peuvent également être combinées et/ou interchangées pour fournir d'autres réalisations.

L'installation 1 de liquéfaction d'hydrogène illustrée comprend un circuit 3 de fluide à refroidir ayant une extrémité amont destinée à être reliée à une source 2 d'hydrogène gazeux (par exemple un réseau de gaz, un électrolyseur, ou toute autre unité de production d'hydrogène) une extrémité aval 23 destinée à être reliée à au moins un organe de collecte du fluide liquéfié (par exemple un ou plusieurs stockages cryogéniques).

Le dispositif 1 comprend un ensemble d'échangeur(s) 4, 5, 6, 7, 8 de chaleur en échange thermique avec le circuit 3 de fluide à refroidir.

Le dispositif 1 comprend un système 9 de refroidissement (réfrigérateur cryogénique) en échange thermique avec au moins une partie de l'ensemble d'échangeur(s) de chaleur et configuré pour abaisser la température du fluide à refroidir à une température déterminée, par exemple comprise entre 15 et 25K.

Comme schématisé, le système 9 de refroidissement comprend de préférence un réfrigérateur à cycle de réfrigération d'un premier gaz de cycle comprenant de l'hélium et/ou de l'hydrogène. Ce réfrigérateur comprend par exemple, disposés en série dans un circuit 10 de cycle: un mécanisme 11 de compression du gaz de cycle, au moins un organe 4, 5, 6, 7 de refroidissement du gaz de cycle, un mécanisme 12 de détente du gaz de cycle (comprenant une ou plusieurs turbine et/ou vanne de détente) et au moins un organe 7, 6, 5, 4 de réchauffage du gaz de cycle détendu. Le mécanisme de compression comprend de préférence plusieurs étages de compression en série composés d'un ensemble de compresseur(s) de type centrifuge et/ou à piston. Le mécanisme de détente comprenant par exemple un ou plusieurs étages de détente composés d'un ensemble de turbine(s) 120 de type centripète.

Comme illustré, l'installation 1 peut comprendre un système 19 de pré-refroidissement (réfrigérateur cryogénique ou équivalent) en échange thermique avec au moins une partie de l'ensemble d'échangeur(s) de chaleur et configuré pour abaisser la température de l'hydrogène à refroidir de la température ambiante à une température déterminée, par exemple comprise 60 et 90K.

Comme illustré, le circuit 3 de fluide à refroidir comprend au moins une section 12 de catalyse configurée pour assurer une conversion de l'hydrogène ortho en hydrogène para. Comme illustré, plusieurs sections de catalyse 12 peuvent être prévues en série sur le circuit 3 de fluide à refroidir, par exemple au niveau des passages dans des échangeurs de chaleur 6, 7.

De préférence, au niveau de la dernière section 12 de catalyse, le circuit 3 de fluide à refroidir comprend une première portion 13 de dérivation de cette section 12 de catalyse. Cette première portion 13 de dérivation est configurée pour permettre de contrôler les proportions relatives d'hydrogène ortho et para obtenus à l'extrémité aval 23.

Ainsi, l'extrémité aval 23 du circuit 3 de fluide à refroidir comprend deux branches parallèles 13, 130 non combinées et alimentées respectivement avec l'hydrogène passé dans la première portion 13 de dérivation et avec de l'hydrogène passé dans la dernière section 12 de catalyse. Ces deux branches ou conduites fournissent deux flux distincts d'hydrogène ayant des proportions relatives d'hydrogène ortho et para différentes (à un ou des organes de collecte). En particulier, le flux passé dans la portion 13 de dérivation peut conserver une pression relativement haute (par exemple autour de 20 bar) pour être envoyée directement dans une conduite de réseau de distribution d'hydrogène liquéfié. Cet hydrogène relativement plus pauvre en para hydrogène peut en particulier être utilisé lors d'un chargement de réservoir de véhicule (avion ou autre moyen de mobilité utilisant de l'hydrogène liquide comme carburant). Ceci permet de réduire la consommation d'une pompe qui serait utilisée car l'hydrogène est déjà une pression relativement haute. De plus, ceci permet de fournir de l'hydrogène moins coûteux à produire pour des applications qui ne nécessitent pas une grande proportion d'hydrogène para. Le cas échéant, la conduite de transport d'hydrogène liquide peut être maintenue en froid avec cet hydrogène liquide relativement plus bon marché.

Ainsi, le flux d'hydrogène refroidi est scindé (de préférence de manière ajustable) en deux à partir d'un certain stade du processus de refroidissement/liquéfaction. Une partie est soumise à la dernière catalyse (pour atteindre par exemple une concentration d'hydrogène para supérieure à 95%) et l'autre partie non (pour conserver une concentration d'hydrogène para comprise entre 50 et 90% par exemple).

Ces taux d'hydrogène para peuvent être adaptés en fonction du besoin et de l'usage de l'utilisateur qui reçoit l'hydrogène liquide (par exemple en fonction d'un calcul de temps de vie de l'hydrogène liquéfié avant son utilisation).

Cette dérivation de la section 12 de catalyse est par exemple située au niveau du circuit 3 où l'hydrogène approche de la température de 40K.

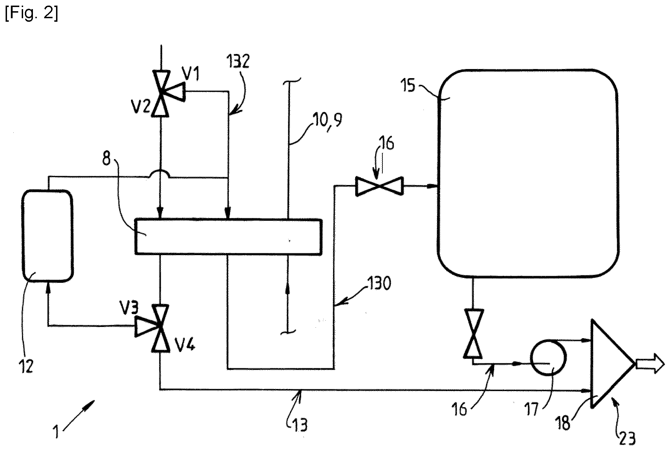

Comme illustré à la [Fig. 2], la branche 130 de l'extrémité aval 23 du circuit 3 de fluide à refroidir alimentée avec l'hydrogène passé dans la section 12 de catalyse peut comprendre un organe 14 de détente du flux d'hydrogène, par exemple une vanne de détente, et un stockage 15 tampon de l'hydrogène détendu.

L'organe 14 de détente et/ou le stockage 15 tampon sont configurés pour stocker l'hydrogène dans le stockage 15 tampon à une pression déterminée, par exemple comprise entre 1 et 2bar. Le stockage 15 tampon comprend de préférence une conduite 16 de soutirage munie éventuellement d'une pompe 17 pour fournir de l'hydrogène liquide à relative basse pression et avec une proportion d'hydrogène para relativement haute.

La branche 13 de l'extrémité aval 23 du circuit 3 de fluide à refroidir alimentée avec l'hydrogène passé dans la portion de dérivation est configurée pour fournir un flux d'hydrogène à une pression supérieure à celle de la pression de l'hydrogène dans l'autre branche 130, et par exemple une pression comprise entre 10 à 25 bar.

Comme illustré, les extrémités aval des deux branches parallèles 13, 130 peuvent être raccordées à un même raccord 18 fluidique ou collecteur.

Comme illustré, la branche 130 du circuit 3 de fluide à refroidir passant par la section 12 de catalyse peut être configurée pour refroidir l'hydrogène avec un échangeur de chaleur 8 de refroidissement avant passer dans la section de catalyse 12 puis pour échanger à nouveau avec ce même échangeur 8 après passage dans la section 12 de catalyse. Cet échangeur 8 de chaleur peut être l'un (et en particulier le dernier en aval) de l'ensemble d'échangeurs précités.

De plus, le circuit 3 de fluide à refroidir peut comprendre une seconde branche 132 de dérivation configurée pour by-passer la section 12 de catalyse, cette seconde branche 132 de dérivation étant raccordée en aval avec la branche 130 alimentée avec l'hydrogène passé dans la section 12 de catalyse (cf. [Fig. 2]).

Comme illustré, le contrôle des flux d'hydrogène dans le circuit 3 et en particulier dans une portion de dérivation peut être commandé par un ensemble de vanne(s), par exemple des vannes à trois voies.

Ainsi, après la sortie d'un échangeur 7 de chaleur (refroidissant par exemple à une température de 20K), le circuit 3 peut comporter une première vanne 20 trois voies permettant de séparer le débit en deux flux. Une seconde vanne 21 trois voies est disposée en aval du dernier échangeur 8. En ouvrant un passage V3 de la seconde vanne 21 trois voies vers la section 12 de catalyse, il est possible de faire passer un débit d'hydrogène à travers la section 12 de catalyse (typiquement un pot catalytique convertissant l'hydrogène jusqu'à atteindre un taux de 98% en para par exemple). Ce débit catalysé repasse ensuite dans l'échangeur 8 de chaleur afin d'être refroidi (pour compenser la chaleur dégagée par la conversion).

Lorsque la voie V3 de deuxième vanne 21 est fermée ou faiblement ouverte, il est possible d'utiliser la vanne 20 trois voies positionnée en amont de l'échangeur 8 de chaleur pour maintenir en permanence un débit dans tous les passages de l'échangeur 8 de chaleur.

En jouant sur l'ouverture des voies V3 et V4 il est possible maîtriser le ratio du débit traversant la section 12 de catalyse et ainsi contrôler la teneur hydrogène para final. En fermant la voie V3 et en ouvrant la voie V4 on conservera le taux plus réduit, par exemple 89% d'hydrogène para. En fermant la voie V4 et en ouvrant la voie V3 on obtiendra un taux plus élevé, par exemple proche de 98%. Toutes les valeurs intermédiaires sont possibles en ajustant le ratio des débits.

Lorsqu'un client commande de l'hydrogène liquide, il est envisageable de lui demander le temps de séjour prévu pour l'hydrogène. En fonction de cette variable, une estimation de la vaporisation par la conversion ortho/para en fonction du taux initial de para hydrogène pourra être effectuée. En faisant varier la teneur en hydrogène para, on atteindra un optimum dans la balance gain/perte. Il suffira ensuite de calculer le ratio de débit nécessaire pour obtenir ce taux de conversion.

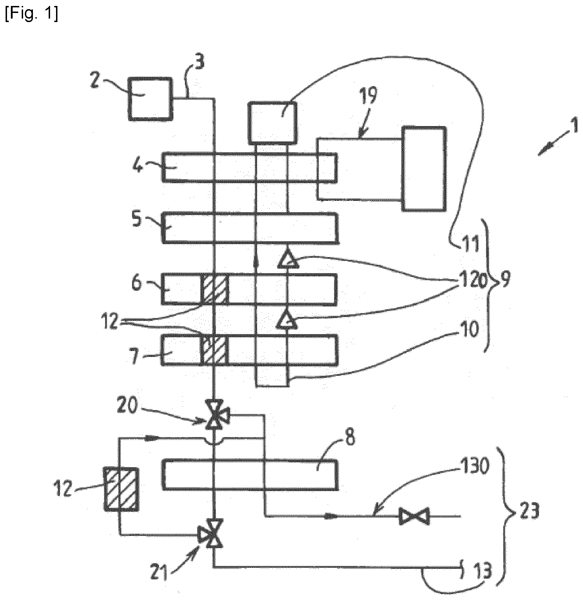

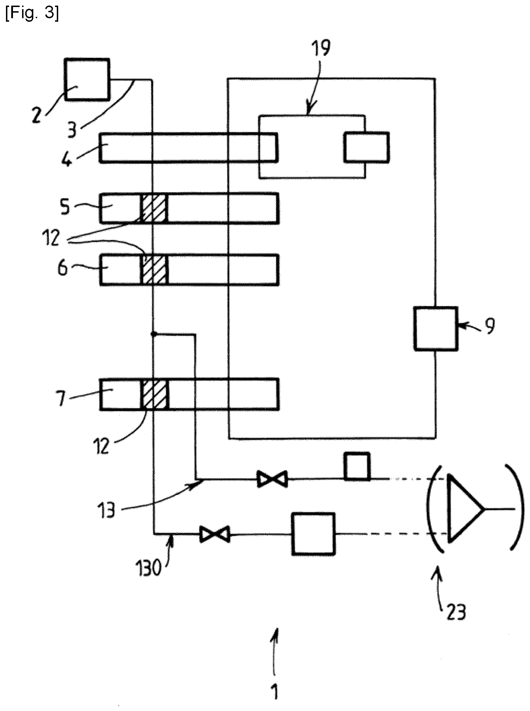

L'invention n'est pas limité aux exemples ci-dessus. En particulier, il est possible de prévoir également un réservoir tampon sur la branche 13 qui fournit de l'hydrogène ayant relativement moins d'hydrogène para. Ce réservoir est de préférence sous pression (15 à 25 bar par exemple). La variante la [Fig. 3] se distingue de celle de la [Fig. 1] en ce que la branche 130 qui passe dans la section 12 de catalyse (et non dans la première portion de dérivation) passe dans une section de catalyse 12 intégrée à l'échangeur 7 de chaleur. Le flux de cette branche 130 passe une seule fois de cet échangeur 7 aval. Chacune des deux branches 13, 130 peut comporter une vanne. Ces deux branches fournissent des flux à des pressions et concentration ortho/para différentes. Les autres éléments identiques sont désignés par les même références et ne sont pas décrits une seconde fois.

## Revendications

1. Installation de liquéfaction d'hydrogène comprenant un circuit (3) d'hydrogène à refroidir ayant une extrémité amont destinée à être reliée à une source (2) d'hydrogène gazeux et une extrémité aval (23) destinée à être reliée à au moins un organe de collecte de l'hydrogène liquéfié, l'installation (1) comprenant un ensemble d'échangeur(s) (4, 5, 6, 7, 8) de chaleur en échange thermique avec le circuit (3) d'hydrogène à refroidir, le dispositif (1) comprenant un système (9) de refroidissement en échange thermique avec au moins une partie de l'ensemble d'échangeur(s) de chaleur et configuré pour abaisser la température de l'hydrogène à une température déterminée, par exemple comprise 15 et 25K, le système (9) de refroidissement comprend un réfrigérateur à cycle de réfrigération d'un premier gaz de cycle comprenant de l'hélium et/ou de l'hydrogène, le circuit (3) d'hydrogène à refroidir comprenant au moins une section (12) de catalyse configurée pour assurer une conversion de l'hydrogène ortho en hydrogène para, le circuit (3) d'hydrogène à refroidir comprenant en outre une première portion (13) de dérivation d'au moins une section (12) de catalyse configurée pour permettre de contrôler les proportions relatives d'hydrogène ortho et para obtenus à l'extrémité aval (23), l'extrémité aval (23) du circuit (3) d'hydrogène à refroidir comprenant deux branches parallèles (13, 130) non combinées et alimentées respectivement avec l'hydrogène passé dans la première portion (13) de dérivation et avec de l'hydrogène passé dans la section (12) de catalyse pour fournir deux flux distincts d'hydrogène ayant des proportions relatives d'hydrogène ortho et para différentes à un ou des organes de collecte et en ce que la branche (130) de l'extrémité aval (23) du circuit (3) d'hydrogène à refroidir alimentée avec l'hydrogène passé dans la section (12) de catalyse comprend un organe (14) de détente du flux d'hydrogène, par exemple une vanne de détente, et un stockage (15) tampon de l'hydrogène détendu.

2. Installation selon la revendication 1, **caractérisée en ce que** l'organe (14) de détente et/ou le stockage (15) tampon sont configurés pour stocker l'hydrogène liquéfié dans le stockage (15) tampon à une pression déterminée, par exemple comprise entre 1 et 2bar.

3. Installation selon l'une quelconque des revendications 1 ou 2, **caractérisée en ce que** le stockage (15) tampon comprend une conduite (16) de soutirage munie d'une pompe (17).

4. Installation selon l'une quelconque des revendications 1 à 3, **caractérisée en ce que** la branche (13) de l'extrémité aval (23) du circuit (3) d'hydrogène à refroidir alimentée avec l'hydrogène passé dans la portion de dérivation est configurée pour fournir un flux d'hydrogène à une pression supérieure à la pression de l'hydrogène dans l'autre branche (130), et par exemple une pression comprise entre 10 à 25 bar.

5. Installation selon l'une quelconque des revendications 1 à 4, **caractérisée en ce que** les extrémités aval des deux branches parallèles (13, 130) sont raccordées à un même raccord (18) fluidique ou collecteur.

6. Installation selon l'une quelconque des revendications 1 à 5, **caractérisée en ce qu'**elle comprend plusieurs sections (12) de catalyse disposées en série d'amont en aval sur le circuit (3) d'hydrogène à refroidir et configurées pour assurer une conversion ortho-para de l'hydrogène, et **en ce que** la première portion (13) de dérivation est configurée pour bypasser la dernière section (12) de catalyse aval.

7. Installation selon l'une quelconque des revendications 1 à 6, **caractérisée en ce que** la branche (130) du circuit (3) de fluide à refroidir passant par la section (12) de catalyse est configurée pour refroidir l'hydrogène avec un échangeur de chaleur (8) de refroidissement avant de passer dans la section de catalyse (12) puis pour échanger à nouveau avec ce même échangeur (8) après passage dans la section (12) de catalyse.

8. Installation selon la revendication 7, **caractérisée en ce que** le circuit (3) d'hydrogène à refroidir comprend une seconde branche (132) de dérivation configurée pour bypasser la section (12) de catalyse, la seconde branche (132) de dérivation étant raccordée en aval avec la branche (130) alimentée avec l'hydrogène passé dans la section (12) de catalyse.

9. Procédé de liquéfaction d'hydrogène utilisant une installation de liquéfaction comprenant un circuit (3) d'hydrogène à refroidir ayant une extrémité amont destinée à être reliée à une source (2) de fluide gazeux et une extrémité aval (23) destinée à être reliée à un organe de collecte de l'hydrogène liquéfié, l'installation (1) comprenant un ensemble d'échangeur(s) (4, 5, 6, 7, 8) de chaleur en échange thermique avec le circuit (3) d'hydrogène à refroidir, le dispositif (1) comprenant un système (9) de refroidissement en échange thermique avec au moins une partie de l'ensemble d'échangeur(s) de chaleur et configuré pour abaisser la température de l'hydrogène à une température déterminée, par exemple comprise 15 et 25K, le système (9) de refroidissement comprend un réfrigérateur à cycle de réfrigération d'un premier gaz de cycle comprenant de l'hélium et/ou de l'hydrogène, le circuit (3) d'hydrogène à refroidir comprenant au moins une section (12) de catalyse configurée pour assurer une conversion ortho-para de l'hydrogène, le circuit (3) d'hydrogène à refroidir comprenant en outre une première portion (13) de dérivation d'au moins une section (12) de catalyse configurée pour permettre de contrôler les proportions relatives d'hydrogène ortho et para obtenus à l'extrémité aval (23), l'extrémité aval (23) du circuit (3) de fluide à refroidir comprenant deux branches parallèles (13, 130) alimentées respectivement avec l'hydrogène passé dans la première portion (13) de dérivation et l'hydrogène passé dans la section (12) de catalyse, pour fournir deux flux distincts d'hydrogène ayant des proportions relatives d'hydrogène ortho et para différentes à un ou des organes de collecte , le procédé comprenant une étape de production et de stockage d'hydrogène liquéfié avec une proportion d'hydrogène para relativement plus importante par exemple supérieure à 95% et une étape de production et de fourniture d'hydrogène liquéfié avec un proportion d'hydrogène para relativement plus faible par exemple comprise entre 50 et 90%.

10. Procédé selon la revendication 9, **caractérisé en ce que**, lors de l'étape de production et de fourniture d'hydrogène liquéfié avec un proportion d'hydrogène para relativement plus faible, l'hydrogène liquéfié est fourni à un tuyau de transport et de distribution d'hydrogène liquéfié.

11. Procédé selon la revendication 10, **caractérisé en ce que**, lors de l'étape de production et de fourniture d'hydrogène liquéfié avec un proportion d'hydrogène para relativement plus faible, une fraction d'hydrogène liquéfié avec un proportion d'hydrogène para relativement plus importante est mélangée à l'hydrogène liquéfié ayant une proportion d'hydrogène para relativement plus faible.
